# EUROPÄISCHE PATENTSCHRIFT

(11) **EP 3 896 320 B1**
(45) Veröffentlichungstag und Bekanntmachung des Hinweises auf die Patenterteilung: **24.08.2022**
(21) Anmeldenummer: 21177850.1
(22) Anmeldetag: 03.06.2020
(51) Int. Cl.: F16K 21/10, F16K 11/074, F16K 15/14

(54) **VENTILKARTUSCHE FÜR EINE SANITÄRARMATUR**
VALVE CARTRIDGE FOR A SANITARY FITTING
CARTOUCHE DE SOUPAPE POUR UNE ARMATURE SANITAIRE

(30) Priorität: 07.06.2019 CH 7752019
(43) Veröffentlichungstag der Anmeldung: 20.10.2021
(62) Teilanmeldung aus: 20178052.5
(73) Patentinhaber: Similor AG, 4242 Laufen (CH)
(72) Erfinder: DURAN, José, 1232 Confignon (CH)
(74) Vertreter: Bohest AG

(56) Entgegenhaltungen:
- EP-A1- 2 998 622
- EP-B1- 1 039 189
- DE-A1- 4 341 650

## Beschreibung

Die vorliegende Erfindung betrifft eine selbstschliessende Ventilkartusche für eine Sanitärarmatur gemäss dem Oberbegriff des unabhängigen Patentanspruchs 1 sowie eine mit einer solchen Ventilkartusche ausgerüstete Sanitärarmatur.

Selbstschliessenden Sanitärarmaturen mit vorzugsweise einstellbarer Verzögerungszeit werden typischerweise in Sanitärinstallationen wie Duschen, Waschbecken etc. eingesetzt. Nach dem Aktivieren (Öffnen) schliessen sie sich nach einer eingestellten Verzögerungszeit selbsttätig wieder und verhindern so, dass Wasser unbeabsichtigt weiter fliesst. Dies begrenzt den Wasserverbrauch und verhindert potentielle Wasserschäden.

Eine gattungsgemässe selbstschliessende Ventilkartusche bzw. selbstschliessende Sanitärarmatur umfasst typischerweise folgende Funktionsgruppen:
- ein einen Wasserdurchfluss sperrendes bzw. freigebendes Ventil,
- ein mit dem Ventil zusammenarbeitendes bewegliches Stellelement, bei dessen Hinbewegung das Ventil geöffnet und bei dessen Rückbewegung das Ventil geschlossen wird,
- ein Bedienorgan zur manuellen Hinbewegung des Stellelements,
- einen üblicherweise durch eine Feder realisierten Rückstellantrieb für das Stellelement und
- eine Verzögerungseinrichtung, um die Rückbewegung des Stellelements zeitlich zu verzögern, wobei die Verzögerungszeit typischerweise einstellbar ist.

Vielfach umfasst die Ventilkartusche bzw. Sanitärarmatur noch eine Mischeinrichtung zur Mischung von Kalt- und Warmwasser, wobei das Mischungsverhältnis ebenfalls einstellbar sein kann. Die Einstellung des Mischungsverhältnisses kann üblicherweise ebenfalls mittels des Bedienorgans erfolgen.

Ein typisches Beispiel einer solchen selbstschliessenden Ventilkartusche bzw. Sanitärarmatur ist im Dokument EP 1 039 189 B1 beschrieben. Das Stellelement ist in dieser Sanitärarmatur axial verstellbar angeordnet und kann mittels des Bedienorgans manuell in Richtung auf das Ventil der Ventileinheit bewegt werden (Hinbewegung). Dabei wird ein Hydraulikmedium von einer ersten Kammer über eine Einwegventilanordnung in eine zweite Kammer gepresst. Das Stellelement kann über einen (Ring-)Magneten magnetisch mit einem am Ventilkörper des Ventils angebrachten Magnetanker gekoppelt werden, wodurch der Ventilkörper von seinem Sitz abhebt und das Ventil öffnet. Die zeitverzögerte Rückbewegung des Stellelements und damit die Schliessung des Ventils erfolgt hydraulisch gedämpft durch Federkraft, wobei das Hydraulikmedium von der zweiten Kammer über eine einstellbare Restriktion in die erste Kammer zurückfliesst. Sobald das Stellelement zeitverzögert soweit zurückgestellt ist, dass der Magnet den Magnetanker nicht mehr halten kann, fällt der Ventilkörper in seinen Sitz zurück und schliesst dadurch das Ventil wieder.

Durch die vorliegende Erfindung soll eine selbstschliessende Ventilkartusche für eine Sanitärarmatur bzw. eine selbstschliessende Sanitärarmatur der gattungsgemässen bzw. im Dokument EP 1 039 189 B1 beschriebenen Art hinsichtlich einfacherer und damit kostengünstigerer Herstellbarkeit, grösserer Funktionssicherheit und besserer Regelbarkeit der Zeitverzögerung verbessert werden. Diese Ziele werden durch die Merkmale der erfindungsgemässen selbstschliessenden Ventilkartusche gemäss dem unabhängigen Patentanspruch 1 erreicht. Vorteilhafte Ausführungsformen bzw. Weiterbildungen sind Gegenstand der abhängigen Patentansprüche.

Die oben genannten Ziele werden unter anderem durch eine hier nicht beanspruchte selbstschliessende Ventilkartusche für eine Sanitärarmatur erreicht, die umfasst: einen Einlass und einen Auslass, ein Ventil zum Sperren bzw. Freigeben eines Durchflusspfads vom Einlass zum Auslass, ein mit dem Ventil zusammenarbeitendes, von einer Geschlossen-Stellung in eine Offen-Stellung hin und zurück bewegliches Stellelement, mittels welchem bei seiner Hinbewegung das Ventil öffenbar und bei seiner Rückbewegung schliessbar ist, einen Rückstellantrieb für die Rückbewegung des Stellelements von der Offen-Stellung in die Geschlossen-Stellung und eine Verzögerungseinrichtung für die Rückbewegung des Stellelements. Die Verzögerungseinrichtung weist eine erste und eine zweite, ein Hydraulikmedium enthaltende Kammer auf, welche Kammern durch eine Trennwand getrennt sind und über eine Einwegventilanordnung einerseits und einen eine Restriktion aufweisenden Rückströmkanal anderseits kommunizierend verbunden sind, so dass bei der Hinbewegung des Stellelements Hydraulikmedium aus der ersten Kammer durch die Einwegventilanordnung in die zweite Kammer treibbar ist und bei der Rückstellbewegung des Stellelements Hydraulikmedium aus der zweiten Kammer nur durch den die Restriktion aufweisenden Rückströmkanal in die erste Kammer zurücktreibbar ist. Die Einwegventilanordnung umfasst eine elastische Ventilmembran, die elastisch abhebbar an der Trennwand anliegend angeordnet ist und mindestens eine in der Trennwand angeordnete Durchflussöffnung überdeckt. Die elastische Ventilmembran weist einen Ringteil und einen peripheren Ringflanschteil auf. Am Ringteil der Ventilmembran sind von diesem wegragende, elastische Befestigungszapfen mit je einer Verdickung angeordnet, welche Befestigungszapfen durch Aussparungen in der Trennwand hindurchgreifen, wobei die Verdickungen an der der Ventilmembran gegenüberliegenden Seite der Trennwand an dieser anliegen und die Ventilmembran an der Trennwand fixieren.

Diese Ausbildung der Ventilmembran erlaubt eine einfache und kostengünstige Montage der Ventilmembran bei gleichzeitig verbesserter Dichtfunktion.

Gemäss einem Hauptaspekt besteht die Erfindung im Folgenden:
Eine selbstschliessende Ventilkartusche für eine Sanitärarmatur umfasst einen Einlass und einen Auslass, ein Ventil zum Sperren bzw. Freigeben eines Durchflusspfads vom Einlass zum Auslass, ein mit dem Ventil zusammenarbeitendes, von einer Geschlossen-Stellung in eine Offen-Stellung hin und zurück bewegliches Stellelement, mittels welchem bei seiner Hinbewegung das Ventil öffenbar und bei seiner Rückbewegung schliessbar ist, einen Rückstellantrieb für die Rückbewegung des Stellelements von der Offen-Stellung in die Geschlossen-Stellung und eine Verzögerungseinrichtung für die Rückbewegung des Stellelements, wobei die Verzögerungseinrichtung eine erste und eine zweite, ein Hydraulikmedium enthaltende Kammer aufweist, welche Kammern durch eine Trennwand getrennt sind und über eine Einwegventilanordnung einerseits und einen eine Restriktion aufweisenden Rückströmkanal anderseits kommunizierend verbunden sind, so dass bei der Hinbewegung des Stellelements Hydraulikmedium aus der ersten Kammer durch die Einwegventilanordnung in die zweite Kammer treibbar ist und bei der Rückstellbewegung des Stellelements Hydraulikmedium aus der zweiten Kammer nur durch den die Restriktion aufweisenden Rückströmkanal in die erste Kammer zurücktreibbar ist. Der Rückströmkanal erstreckt sich durch das Stellelement von einer Eintrittsöffnung über einen hohlzylindrischen Abschnitt des Stellelements bis zu einer Austrittsöffnung. Im Stellelement ist ein Drosselorgan mit einem zylindrischen Drosselkopf in Längsrichtung des Stellelements relativ zu diesem verstellbar angeordnet, wobei der Drosselkopf durch Verstellung des Drosselorgans in den hohlzylindrischen Abschnitt des Stellelements einführbar ist. Entweder der Drosselkopf oder die Innenwand des hohlzylindrischen Abschnitts des Stellelements weist eine Nut auf, die sich von einem Ende des Drosselkopfs in Längsrichtung desselben erstreckt und eine vom Ende des Drosselkopfs weg abnehmende Tiefe aufweist bzw. die sich von der Austrittsöffnung des Stellelements in Längsrichtung desselben erstreckt und eine von der Austrittsöffnung weg abnehmende Tiefe aufweist. Der Drosselkopf bildet zusammen mit der Innenwand des hohlzylindrischen Abschnitts des Stellelements und mit der Nut die Restriktion, wobei durch Verstellung des Drosselorgans relativ zum Stellelement der Rückströmkanal mehr oder weniger verschliessbar und dadurch der Durchflussquerschnitt der Restriktion einstellbar ist.

Diese Realisierung der Restriktion ist herstellungstechnisch besonders günstig und ermöglicht eine präzise Einstellbarkeit der Verzögerungszeit der Verzögerungseinrichtung in sehr weiten Grenzen.

Vorteilhafterweise ist der Ringflanschteil der Ventilmembran im nicht in die Ventilkartusche eingebauten Zustand konisch oder konkav ausgebildet, so dass die Ventilmembran auf der Seite der Befestigungszapfen eine konkave Form aufweist. Diese "regenschirmartige" Ausbildung der Ventilmembran gewährleistet eine hohe Dichtkraft.

Vorteilhafterweise ist am Ringteil der Ventilmembran eine ring- bzw. hülsenförmige Dichtlippe ausgebildet, welche dichtend an dem sich durch die Ventilmembran erstreckenden Stellelement anliegt. Dadurch kann das Stellelement leicht gleiten, wobei aber gleichzeitig eine hohe Dichtigkeit gewährleistet ist.

Gemäss einer besonders vorteilhaften Ausführungsform weist die elastische Ventilmembran einen Ringteil und einen peripheren Ringflanschteil auf. Am Ringteil der Ventilmembran sind von diesem wegragende, elastische Befestigungszapfen mit je einer Verdickung angeordnet, welche Befestigungszapfen durch Aussparungen in der Trennwand hindurchgreifen, wobei die Verdickungen an der der Ventilmembran gegenüberliegenden Seite der Trennwand an dieser anliegen und die Ventilmembran an der Trennwand fixieren. Der Rückströmkanal erstreckt sich durch das Stellelement von einer Eintrittsöffnung über einen hohlzylindrischen Abschnitt des Stellelements bis zu einer Austrittsöffnung. Im Stellelement ist ein Drosselorgan mit einem zylindrischen Drosselkopf in Längsrichtung des Stellelements relativ zu diesem verstellbar angeordnet, wobei der Drosselkopf durch Verstellung des Drosselorgans in den hohlzylindrischen Abschnitt des Stellelements einführbar ist. Entweder der Drosselkopf oder die Innenwand des hohlzylindrischen Abschnitts des Stellelements weist eine Nut auf, die sich von einem Ende des Drosselkopfs in Längsrichtung desselben erstreckt und eine vom Ende des Drosselkopfs weg abnehmende Tiefe aufweist bzw. die sich von der Austrittsöffnung des Stellelements in Längsrichtung desselben erstreckt und eine von der Austrittsöffnung weg abnehmende Tiefe aufweist. Der Drosselkopf bildet dabei zusammen mit der Innenwand des hohlzylindrischen Abschnitts des Stellelements und mit der Nut die Restriktion, wobei durch Verstellung des Drosselorgans relativ zum Stellelement der Rückströmkanal mehr oder weniger verschliessbar und dadurch der Durchflussquerschnitt der Restriktion einstellbar ist. Diese Ausführungsform der Ventilkartusche vereint die Vorteile beider Aspekte der Erfindung.

Vorteilhafterweise weist die Ventilkartusche einen mit dem Stellelement kinematisch verbundenen, vorzugsweise ringförmigen Magnet zur Betätigung des Ventils auf. Das Ventil weist dabei einen Ventilsitz, einen Ventilkörper und einen vorzugsweise ringplattenförmigen Magnetanker auf, wobei der Magnetanker bei Annäherung des Magneten von diesem anziehbar ist, wobei durch das Anziehen des Magnetankers ein Abheben des Ventilkörpers vom Ventilsitz und damit ein Öffnen des Ventils auslösbar ist. Ein solches magnetisch betätigbares Ventil ist besonders zuverlässig.

Vorteilhafterweise weist die Ventilkartusche eine im Durchflusspfad vor dem Ventil angeordnete Mischeinrichtung für aus zwei getrennten Einlässen zuführbares, insbesondere kaltes und warmes Wasser auf.

Vorteilhafterweise weist die Mischeinrichtung dabei zwei relativ zu einander drehverstellbare und dichtend aneinander gleitende Keramikscheiben mit sie durchsetzenden Durchflussöffnungen auf, wobei abhängig von der relativen Drehstellung der beiden Keramikscheiben durch die Durchflussöffnungen in den beiden Keramikscheiben Wasser entweder nur vom einen Einlass oder nur vom anderen Einlass oder gleichzeitig von beiden Einlässen zum Ventil führbar ist. Eine Mischeinrichtung mit Keramikscheiben ist konstruktiv einfach und funktionell zuverlässig.

Vorteilhafterweise münden der Auslass und der mindestens eine Einlass parallel zur Bewegungsrichtung des Stellelements aus bzw. ein. Dies erhöht die mechanische und anschlussmässige Kompatibilität der Ventilkartusche und erleichtert den Ersatz bestehender Ventilkartuschen durch eine erfindungsgemässe Kartusche.

Hinsichtlich der Sanitärarmatur besteht die Erfindung darin, dass die Sanitärarmatur eine erfindungsgemässe selbstschliessende Ventilkartusche aufweist.

Im Folgenden wird die Erfindung anhand von in den Zeichnungen dargestellten Ausführungsbeispielen näher erläutert. Es zeigen:
- Fig. 1 -: eine Seitenansicht eines ersten Ausführungsbeispiels der erfindungsgemässen Ventilkartusche;
- Fig. 2 -: eine perspektivische Ansicht der Ventilkartusche der Fig. 1;
- Fig. 3 -: einen Axialschnitt durch die Ventilkartusche der Fig. 1 in geschlossenem Zustand des Ventils;
- Fig. 4 -: eine Explosionsdarstellung der Ventilkartusche gemäss den Figuren 1-3;
- Fig. 5 -: eine Explosionsdarstellung einer Verzögerungseinrichtung der Ventilkartusche;
- Fig. 6 -: einen Axialschnitt durch eine erfindungsgemässe, mit einer Ventilkartusche gemäss den Figuren 1-3 ausgestattete selbstschliessende Sanitärarmatur in geöffnetem Zustand des Ventils;
- Fig. 7 -: einen Axialschnitt analog Fig. 3 durch ein zweites Ausführungsbeispiel der erfindungsgemässen Ventilkartusche in geschlossenem Zustand des Ventils;
- Fig. 8-9: - eine perspektivische Ansicht und eine Schnittansicht einer Ventilmembran der erfindungsgemässen Ventilkartusche im Zustand vor dem Einbau in letztere;
- Fig. 10 -: eine Schnittansicht eines Details der Verzögerungseinrichtung der erfindungsgemässen Ventilkartusche mit eingebauter Ventilmembran;
- Fig. 11 -: eine perspektivische Ansicht eines Drosselorgans der erfindungsgemässen Ventilkartusche;
- Fig. 12 -: eine perspektivische Teilansicht eines Stellelements der erfindungsgemässen Ventilkartusche und
- Fig. 13 -: eine perspektivische Teilansicht des Stellelements analog Fig. 12 mit einem eingesetzten Drosselorgan.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen. Lage- und Richtungsbezeichnungen wie oben, unten, aufwärts, abwärts beziehen sich auf die in den Figuren dargestellte typische Einbauorientierung der Ventilkartusche.

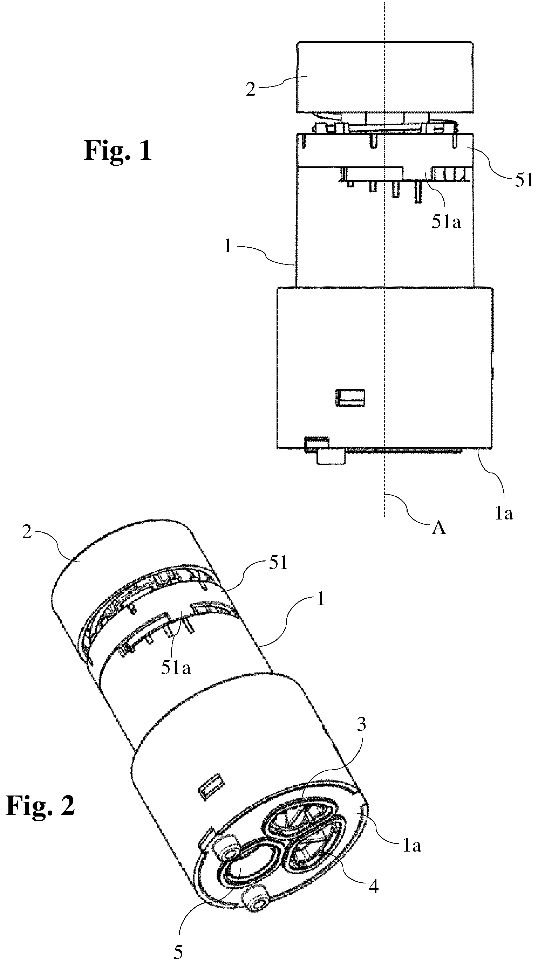

Die äussere Gestalt eines Ausführungsbeispiels der erfindungsgemässen Ventilkartusche geht aus den Figuren 1 und 2 hervor. Die Ventilkartusche weist ein abgestuft zylindrisches Gehäuse 1 mit einer Längsachse A auf. Am (in der Fig. 1) oberen Ende ist ein Griffmitnehmer 2 angeordnet. An der dem Griffmitnehmer 2 gegenüberliegenden Stirnwand 1a des Gehäuses 1 befinden sich zwei Einlässe 3 und 4 sowie ein Auslass 5 für die Zu- und Abfuhr von Wasser. Die Einlässe 3 und 4 und der Auslass 5 sind parallel zur Achse A ausgerichtet. Der Auslass könnte in einer Variante alternativ auch seitlich aus dem Gehäuse 1 ausmünden. Ferner zu erkennen ist ein Begrenzungsorgan 51 zur Begrenzung des Mischverhältnisses des durch die Einlässe 3 und 4 zugeführten Wassers. Darauf wird weiter unten noch näher eingegangen.

Die äussere Gestalt der Ventilkartusche ist bezüglich Form und Abmessungen so ausgebildet, dass die Ventilkartusche mechanisch und anschlussmässig kompatibel mit herkömmlichen Ventilkartuschen, sei es selbstschliessender oder nicht selbstschliessender Art, ist. Dadurch ist es möglich, die Ventilkartusche in Sanitärarmaturen ohne bauliche Änderungen bzw. Anpassungen derselben als Ersatz für bestehende Ventilkartuschen einzusetzen.

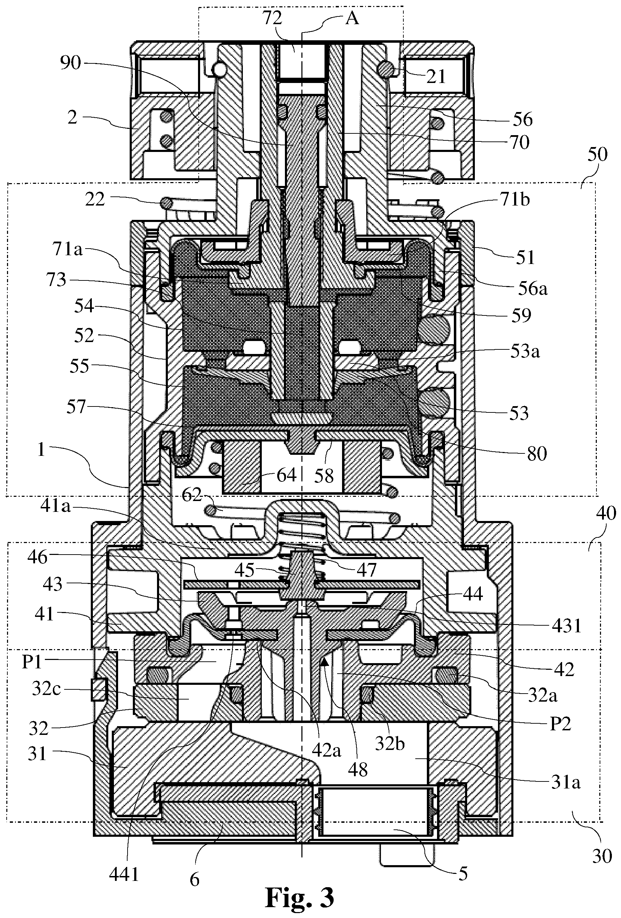

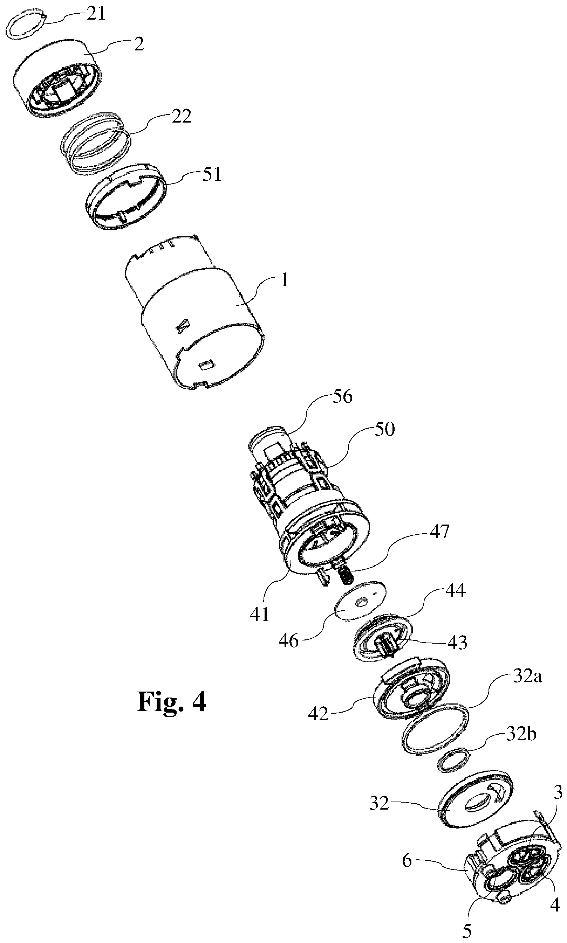

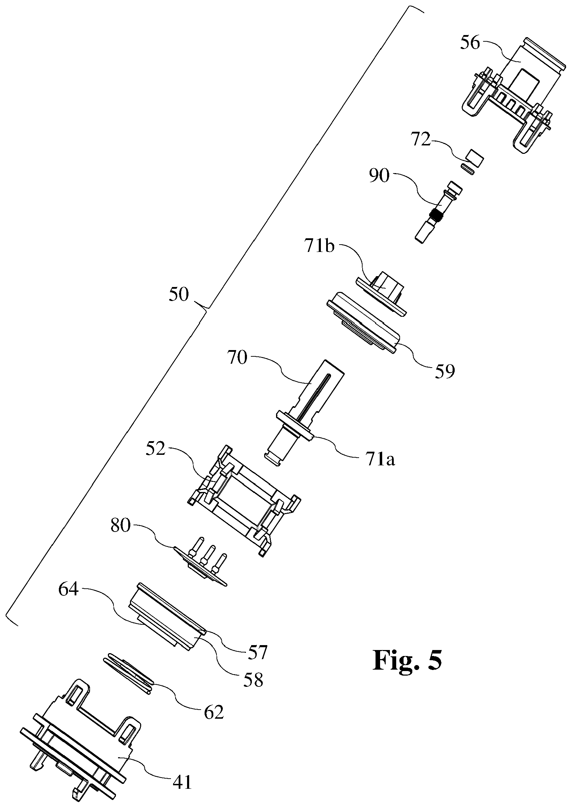

Der detaillierte Aufbau der Ventilkartusche geht aus der Schnittdarstellung der Fig. 3 und den Explosionsdarstellungen der Figuren 4 und 5 hervor. Im Inneren des Gehäuses 1 sind axial übereinander drei Funktionseinheiten angeordnet. Zu unterst, also an dem den Ein- und Auslässen zugewandten Gehäusende befindet sich eine Mischeinrichtung 30. Darüber befindet sich eine Ventileinrichtung 40 und darüber ist eine Verzögerungseinrichtung 50 angeordnet, welche teilweise aus dem Gehäuse 1 herausragt und den Griffmitnehmer 2 trägt. Die Verzögerungseinrichtung 50, die Ventileinrichtung 40 und Teile der Mischeinrichtung 30 sind zusammen relativ zum Gehäuse 1 um die Achse A (begrenzt) drehverstellbar angeordnet, wobei die maximale Drehverstellung (maximaler Drehwinkel) durch das Begrenzungsorgan 51 begrenzt ist. Das Begrenzungsorgan 51 ist selbst auf dem (oberen) Rand des Gehäuses um die Achse A in Stufen drehverstellbar angeordnet und weist einen Anschlag 51a auf, der mit nicht bezeichneten Anschlägen am Gehäuserand zusammenarbeitet. Entsprechend ist je nach Position des Begrenzungsorgans 51 der maximale Drehwinkel der Verzögerungseinrichtung 50, der Ventileinrichtung 40 und der Teile der Mischeinrichtung 30 in Stufen einstellbar.

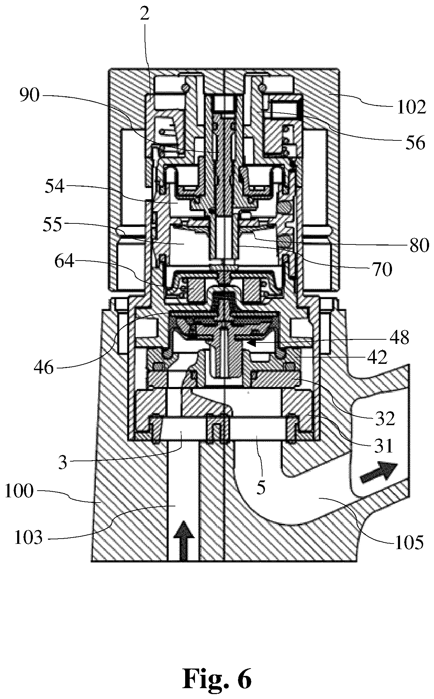

Die Ventileinrichtung 40 ist strömungstechnisch in einem Durchflusspfad zwischen den beiden Einlässen 3 und 4 und dem Auslass 5 angeordnet und unterbricht diesen Durchflusspfad (Ventil geschlossen) bzw. gibt ihn frei (Ventil offen). Der Durchflusspfad umfasst einen einlaufseitigen Abschnitt P1 in Strömungsrichtung vor dem Ventil und einen auslaufseitigen Abschnitt P2 nach dem Ventil. Der Durchflusspfad verläuft durch Ausnehmungen in verschiedenen Bauteilen der Mischeinrichtung 30 und ist in Fig. 3 nur teilweise zu sehen. In Fig. 6 ist ein vollständiger Durchflusspfad dargestellt.

Die Ventileinrichtung 40 umfasst ein Ventilgehäuse 41, ein Spritzgussteil 42 aus Kunststoff, einen Ventilkörper 43 mit einer Steuerungsöffnung 431, eine elastische Tragmembran 44 mit einer Steuerungsöffnung 441, einen axialen Zapfen 45, einen Magnetanker 46 in Form einer Platte aus ferromagnetischem Material und eine schraubenförmige Schliessfeder 47. Der Ventilkörper 43 und die Tragmembran 44 sind bewegungsfest miteinander verbunden und bilden eine gemeinsam axial (begrenzt) bewegliche Einheit. Ebenso sind der Zapfen 45 und der Magnetanker 46 sind bewegungsfest miteinander verbunden und bilden eine gemeinsam axial (begrenzt) bewegliche Einheit. Die Tragmembran 44 trägt den Ventilkörper 43 und ist mit ihrem Umfangsrand zwischen dem Spritzgussteil 42 und dem Ventilgehäuse 41 eingespannt. Am Spritzgussteil 42 ist ein ringförmiger Ventilsitz 42a ausgebildet, auf dem der Ventilkörper 43 mit der Tragmembran 44 (bei geschlossenem Ventil) aufliegt. Das zur leichteren Referenzierbarkeit gesamthaft mit 48 bezeichnet eigentliche Ventil der Ventileinrichtung 40 ist somit durch den Ventilsitz 42a und den in der Tragmembran 44 befestigten Ventilkörper 43 gebildet. Durch die elastische Tragmembran 44 ist der Ventikörper 43 axial beweglich gelagert, so dass er zum Öffnen des Ventils 48 vom Ventilsitz 42a abgehoben und umgekehrt zum Schliessen des Ventils 48 wieder auf den Ventilsitz 42a aufgesetzt werden kann. Die zwischen einer Zwischenwand 41a des Ventilhehäuses 41 und dem Magnetanker 46 angeordnete Schliessfeder 47 drückt (im Ruhezustand der Ventilkartusche) den Ventilkörper 43 auf den Ventilsitz 42a und hält so das Ventil 48 geschlossen.

Die unterhalb des Ventils 48 der Ventileinrichtung 40 angeordnete Mischeinrichtung 30 umfasst zwei Keramikscheiben 31 und 32, welche dichtend aneinander anliegen und relativ zu einander (um die Achse A) drehverstellbar sind. Im konkreten Fall ist die Keramikscheibe 32 (zusammen mit dem Spritzgussteil 42) verdrehbar, während die Keramikscheibe 31 bezüglich des Gehäuses 1 der Ventilkartusche drehfest angeordnet ist. Die verdrehbar angeordnete Keramikscheibe 32 ist über O-Ringe 32a und 32b gegen das Spritzgussteil 42 abgedichtet. Die beiden Keramikscheiben 31 und 32 und das Spritzgussteil 42 weisen Durchlassöffnungen auf, durch welche einerseits Wasser von den beiden Einlässen 3 und 4 zur Ventileinrichtung 40 und anderseits von der Ventileinrichtung 40 zum Auslass 5 fliessen kann. In der Fig. 3 sind nur zwei Durchlassöffnungen 31a und 32c dargestellt. Die übrigen Durchlassöffnungen liegen wie die Einlässe 3 und 4 ausserhalb der Zeichnungsebene und sind daher nicht sichtbar. Je nach relativer Drehstellung der beiden Keramikscheiben 31 und 32 können deren Durchlassöffnungen so miteinander zur Deckung gebracht werden, dass Wasser entweder nur vom einen Einlass oder nur vom anderen Einlass oder von beiden Einlässen 3 und 4 zum Ventil gelangen kann. Durch Relativverdrehung der beiden Keramikscheiben 31 und 32 ist somit das Mischungsverhältnis des von den beiden Einlässen kommenden Wassers einstellbar. Im Falle von kaltem und heissem Wasser läuft dies auf eine Temperatureinstellung hinaus. Die Relativverdrehung der Keramikscheibe 32 und damit die Temperatureinstellung des auslaufenden Wassers erfolgt durch Drehung des Griffmitnehmers 2 um die Achse A, wobei die gesamte Verzögerungseinrichtung 50, die Ventileinrichtung 40 sowie deren Spritzgussteil 42 verdreht werden und die Keramikscheibe 32 mit verdrehen. Das Begrenzungsorgan 51 dient zur stufenweise einstellbaren Begrenzung der Drehbewegung des Griffmitnehmers 2 und letztendlich der Keramikscheibe 32 und damit zur Temperaturbegrenzung des auslaufenden Wassers. Mischeinrichtungen mit relativ zu einander drehverstellbaren Scheiben sind beispielsweise aus dem Dokument EP 2 998 623 B1 bekannt und bedürfen deshalb an dieser Stelle keiner näheren Erläuterung.

In das untere Ende des Gehäuses 1 der Ventilkartusche ist ein bezüglich des Gehäuses 1 drehfestes Abschlussteil 6 eingesetzt, welches die bezüglich des Gehäuses 1 drehfest angeordnete Keramikscheibe 31 aufnimmt. Die Einlässe 3 und 4 und der Auslass 5 sind ebenfalls an diesem Abschlussteil 6 angeordnet (siehe auch Explosionsdarstellung Fig. 4).

Die Verzögerungseinrichtung 50 schliesst sich an die Ventileinrichtung 40 unmittelbar oberhalb derselben an. Sie umfasst ein im Axialschnitt im Wesentlichen H-förmiges Kammergehäuse 52, welches zwei durch eine Trennwand 53 getrennte Kammern 54 und 55 bildet. Das Kammergehäuse 52 ist direkt auf dem Ventilgehäuse 41 der Ventileinrichtung 40 angeordnet. Auf dem Kammergehäuse 52 ist ein rohrförmiges Führungsteil 56 angeordnet, welches nach oben aus dem Gehäuse 1 der Ventilkartusche herausragt. Das Ventilgehäuse 41, das Kammergehäuse 52 und das Führungsteil 56 sind bewegungsfest mit einander verbunden.

Die in der Zeichnung untere, im Folgenden als zweite Kammer bezeichnete Kammer 55 ist an ihrer der Trennwand 53 gegenüberliegenden Seite durch eine mittels einer elastischen Tragmembran 57 axial (begrenzt) beweglich angeordnete Kammerwand 58 abgeschlossen. Die Tragmembran 57 ist mit ihrem Umfangsrand zwischen dem Kammergehäuse 52 und dem Ventilgehäuse 41 eingespannt. In ähnlicher Weise ist die obere, im Folgenden als erste Kammer bezeichnete Kammer 54 durch eine ebenfalls (begrenzt) axial beweglich angeordnete, aus zwei Flanschteilen 71a und 71b bestehende Kammerwand abgeschlossen. Die beiden Flanschteile 71a und 71b klemmen zwischen sich eine elastische Tragmembran 59 fest, die mit ihrem Umfangsrand zwischen dem Kammergehäuse 52 und einem Fortsatz 56a des Führungsteils 56 eingespannt ist. Die beiden Kammern 54 und 55 sind vollständig mit einem Hydraulikmedium gefüllt, das in Fig. 3 durch die fein schraffierten Bereiche innerhalb der beiden Kammern angedeutet ist. An der Aussenseite der Kammerwand 58 ist ein Ringmagnet 64 bewegungsstarr befestigt.

Aussen auf dem Führungsteil 56 ist der Griffmitnehmer 2 axial entgegen der Rückstellkraft einer Schraubenfeder 22 gleitend verschiebbar gelagert und mittels eines Sicherungsrings 21 gesichert. Innen im Führungsteil 56 ist ein längliches, im Wesentlichen rohrförmig ausgebildetes Stellelement 70 axial verschiebbar gelagert. Der Flanschteil 71a ist direkt aussen am Stellelement 70 ausgebildet, der Flanschteil 71b ist aussen auf das Stellelement 70 aufgespannt. Im oberen Ende des Stellelements 70 ist ein entfernbarer Sicherungsring 72 angeordnet.

Das Stellelement 70 ist über einen mit dem Griffmitnehmer 2 verbundenen Griff 102 (siehe Fig. 6) manuell entgegen der Kraft einer Rückstellfeder 62 von einer Geschlossen-Stellung in axialer Richtung einwärts (begrenzt) auf das Ventil 48 zu in eine Offen-Stellung (Hinbewegung) und vom Ventil 48 weg (Rückbewegung) beweglich gelagert. Die Rückstellfeder 62 stützt sich einerseits an der Kammerwand 58 und anderseits an der Zwischenwand 41a des Ventilgehäuses 41 ab und bildet einen Rückstellantrieb für das Stellelement 70.

Das Stellelement 70 durchsetzt die erste Kammer 54, die Trennwand 53 und die zweite Kammer 55 und drückt mit seinem unteren Ende auf die Tragmembran 57 und damit indirekt auf die Kammerwand 58. Bei axialer Bewegung des Stellelements 70 bewegen sich die beiden Kammerwände 58 und 71a, 71b mit und umgekehrt. Die Rückstellfeder 62 drückt die Kammerwand 58 und damit das Stellelement 70 in Richtung vom Ventil 48 weg.

Damit überhaupt eine Bewegung des Stellelements 70 und mit diesem verbunden der beiden Kammerwände möglich ist, sind die beiden Kammern 54 und 55 kommunizierend miteinander verbunden, so dass durch die Bewegung der Kammerwände verdrängtes Hydraulikmedium von der einen in die andere Kammer und wieder zurück fliessen kann. Die kommunizierende Verbindung ist einerseits hergestellt durch in der Trennwand 53 vorgesehene Durchflussöffnungen 53a und anderseits durch einen Rückströmkanal 73, der sich durch das Innere des Stellelements 70 erstreckt und eine Restriktion aufweist. An der der zweiten Kammer 55 zugewandten Seite der Trennwand 53 ist eine elastische Ventilmembran 80 angeordnet, welche die Durchflussöffnungen 53a überdeckt und zusammen mit diesen eine Einwegventilanordnung bildet, durch welche bei der Hinbewegung des Stellelements 70 Hydraulikmedium von der ersten Kammer 54 praktisch ungehindert und rasch in die zweite Kammer 55 strömen kann. Das Zurückströmen des Hydraulikmediums von der zweiten Kammer 55 in die erste Kammer 54 kann wegen der Einwegventilanordnung nur durch den die Restriktion aufweisenden Rückströmkanal 73 erfolgen. Aufgrund der strömungsbehindernden Wirkung der Restriktion erfolgt das Zurückströmen des Hydraulikmediums vergleichsweise langsam, so dass die Rückstellbewegung des Stellelements 70 und damit verbunden die Schliessung des Ventils 48 mit einer zeitlichen Verzögerung erfolgt, welche von der Restriktion bzw. deren freien Durchflussquerschnitt bestimmt ist. Details der Restriktion sind weiter unten näher erläutert.

Zum Aktivieren der Ventilkartusche, d.h. zum Öffnen des Ventils 48 wird das Stellelement 70 manuell mittels des Griffmitnehmers 2 entgegen der Kraft der Rückstellfeder 62 axial einwärts in Richtung zum Ventil 48 hin bewegt. Dabei bewegt sich auch die Kammerwand 58 mit dem daran angebrachten Magneten 64. Sobald der Magnet 64 nahe genug am Ventil 48 ist, zieht er den Magnetanker 46 an und hebt diesen und den axialen Zapfen 45 entgegen der Kraft der Schliessfeder 47 vom Ventilkörper 43 ab. Dies bewirkt, dass nun Wasser aus dem Bereich oberhalb des Ventilkörpers 43 durch die Steuerungsöffnung 431 nach aussen (in Fig. 3 unten) in den Auslass 5 fliessen kann. Weil die Steuerungsöffnung 431 grösser ist als die Steuerungsöffnung 441 in der Tragmembran 44, fliesst mehr Wasser vom Bereich oberhalb des Ventilkörpers 43 nach aussen (unten) als durch die Steuerungsöffnung 441 in den Bereich oberhalb des Ventilkörpers 43 nach innen (oben), wodurch der anfänglich vorhandene Überdruck im Bereich oberhalb des Ventilkörpers 43 abgebaut und der Ventilkörper 43 schliesslich durch den von unten wirkenden Wasserdruck vom Ventilsitz 42a weg nach oben in die Offen-Stellung gedrückt wird, die in Fig. 6 dargestellt ist. In dieser Offen-Stellung verschliesst der axiale Zapfen 45 die Steuerungsöffnung 431 wieder.

Sobald der Griffmitnehmer 2 losgelassen wird, bewegt einerseits die Schraubenfeder 22 den Griffmitnehmer 2 in seine Ausgangslage zurück und anderseits die Rückstellfeder 62 die Kammerwand 58 mit dem daran angebrachten Magneten 64 zusammen mit dem Stellelement 70 vom Ventil 48 weg (Rückbewegung). Dabei entfernt sich der Magnet 64 vom Magnetanker 46. Wenn die Entfernung des Magneten 64 vom Magnetanker 46 ausreichend gross ist, kann der Magnet 64 den Magnetanker 46 entgegen der Kraft der Schliessfeder 47 nicht mehr festhalten, so dass die Schliessfeder 47 zusammen mit dem Wasserdruck von oben auf den Magnetanker 46 und den Ventilkörper 43 letzteren auf den Ventilsitz 42a drückt und damit das Ventil 48 wieder schliesst (Ruhestellung der Ventilkartusche). Die Rückbewegung des Stellelements 70 erfolgt aufgrund der strömungsbehindernden Wirkung der im Rückströmkanal 73 angeordneten Restriktion vergleichsweise langsam, so dass sich das Ventil 48 erst mit einer gewissen zeitlichen Verzögerung schliesst.

Die Explosionsdarstellung der Fig. 4 zeigt sämtliche Einzelteile der Ventilkartusche, wobei aber die Verzögerungseinrichtung 50 nur gesamthaft dargestellt ist. In Fig. 5 ist die Verzögerungseinrichtung 50 selbst explodiert dargestellt. Die Bezugszeichen in den Figuren 4 und 5 entsprechen denjenigen der Fig. 3.

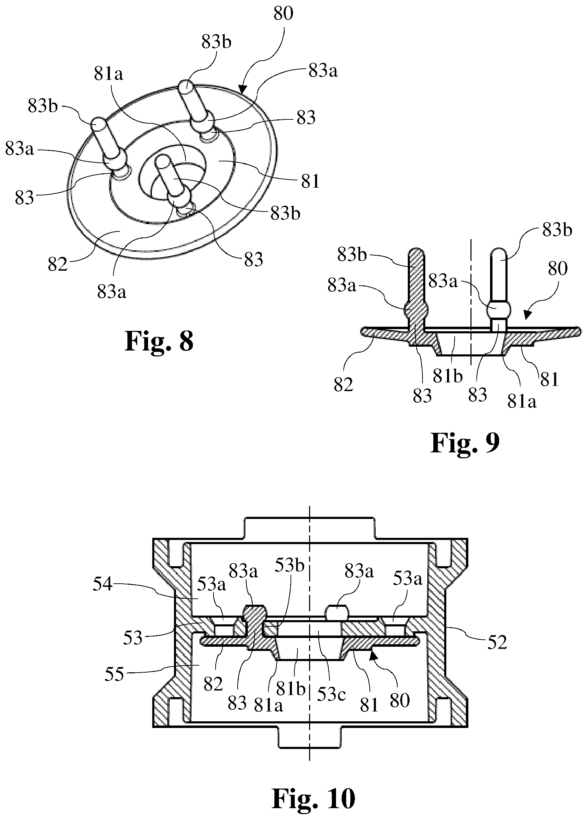

Abgesehen von der Mischeinrichtung 30 entspricht die erfindungsgemässe Ventilkartusche soweit in Aufbau und Funktionsweise im Wesentlichen der im Dokument EP 1 039 189 B1 offenbarten Ventilkartusche, so dass der Fachmann soweit keiner näheren Erläuterung bedarf. Die wesentlichsten Unterschiede der erfindungsgemässen Ventilkartusche gegenüber der aus dem Dokument EP 1 039 189 B1 bekannten Ventilkartusche liegen in der Detailausbildung der Verzögerungseinrichtung 50, worauf im Folgenden unter Bezugnahme auf die Figuren 8-13 näher eingegangen wird.

Eine funktionswesentliche Bedeutung kommt der zusammen mit der Trennwand 53 und deren Durchflussöffnungen 53a eine Einwegventilanordnung bildenden elastischen Ventilmembran 80 zu. Sie ist tellerförmig ausgebildet und umfasst einen inneren Ringteil 81 und einen peripheren Ringflanschteil 82. Der etwas dickere Ringteil 81 besitzt eine konische Durchführungsöffnung 81b und läuft in eine ringförmige Dichtlippe 81a aus. Der etwas dünnere Ringflanschteil 82 ist im nicht eingebauten Zustand leicht konisch ausgebildet, so dass die Ventilmembran 80 im nicht eingebauten Zustand leicht konkav gewölbt ist ("regenschirmartige" Gestalt, Fig. 9). Am Ringteil 81 sind (hier z.B. drei) ebenfalls elastische Befestigungszapfen 83 gleichmässig über den Umfang verteilt angeordnet. Die Befestigungszapfen 83 erstrecken sich im Wesentlichen senkrecht zur Ebene des Ringteils 81 der Ventilmembran 80. Die Befestigungszapfen 83 weisen je eine Verdickung 83a auf. Vor dem Einbau der Ventilmembran 80 weisen die Befestigungszapfen 83 ferner je noch einen länglichen Fortsatz 83b auf (Figuren 8 und 9).

Die Fig. 10 verdeutlicht die Befestigung der Ventilmembran 80 an der Trennwand 53 des Kammergehäuses 52. In der Trennwand 53 ist eine der Anzahl Befestigungszapfen 83 entsprechende Anzahl von Aussparungen 53b vorgesehen, deren örtliche Verteilung mit derjenigen der Befestigungszapfen 83 übereinstimmt. Zum Einbau der Ventilmembran 80 werden die Fortsätze 83b der Befestigungszapfen 83 durch die Aussparungen 53b in der Trennwand 53 hindurchgeführt. Dann werden die (elastisch komprimierbaren) Verdickungen 83a an den Fortsätzen 83b durch die Aussparungen 53b hindurch gezogen, bis der Ringteil 81 der Ventilmembran 80 bündig an der Trennwand 53 anliegt. Die Verdickungen 83a entspannen sich wieder und verhindern, dass sich die Ventilmembran 80 von der Trennwand 53 lösen kann. Nach der Befestigung der Ventilmembran 80 werden die nun überflüssigen Fortsätze 83b entfernt. Der periphere Ringflanschteil 82 der Ventilmembran 80 überdeckt die Durchflussöffnungen 53a der Trennwand 53 und schliesst diese dicht ab, wobei durch die vor dem Einbau ursprünglich leicht konkave Formgebung der Ventilmembran eine leichte Vorspannung erzeugt ist, welche die Dichtigkeit verbessert. Aufgrund der relativ geringen Dicke des elastischen Ringflanschteils 82 kann dieser jedoch leicht von der Trennwand 53 weggedrückt werden, um den Durchfluss von Hydraulikmedium durch die Trennwand nach (in der Zeichnung) unten zu ermöglichen. Die erfindungsgemässe Ausbildung der Ventilmembran 80 mit Befestigungszapfen 83 erlaubt eine sehr einfache und kostengünstige Montage derselben. Die "regenschirmartige" Ausbildung gewährleistet eine hohe Dichtkraft.

Fig. 10 zeigt auch eine Durchführungsöffnung 53c, durch welche sich das Stellelement 70 im zusammengebauten Zustand der Ventilkartusche erstreckt (siehe Fig. 3). Die Ventilmembran 80 ist so angeordnet, dass ihre Durchführungsöffnung 81b mit der ring- bzw. hülsenförmigen Dichtlippe 81a koaxial zur Durchführungsöffnung 53c liegt. Das Stellelement 70 erstreckt sich auch durch die Ventilmembran 80 bzw. deren hülsenförmige Dichtlippe 81a. Die Durchführung des Stellelements 70 durch die Trennwand 53 muss dicht sein, damit zwischen der Aussenwand des Stellelements 70 und der Innenwand der Durchführungsöffnung 53c kein sekundärer Strömungspfad für das Hydraulikmedium zwischen den beiden Kammern entsteht. Bei der erfindungsgemässen Ventilmembran 80 erfolgt die Abdichtung durch die hülsenförmige Dichtlippe 81a der Ventilmembran 80, in welchem das Stellelement 70 leicht gleiten kann, wobei aber gleichzeitig eine hohe Dichtigkeit gewährleistet ist.

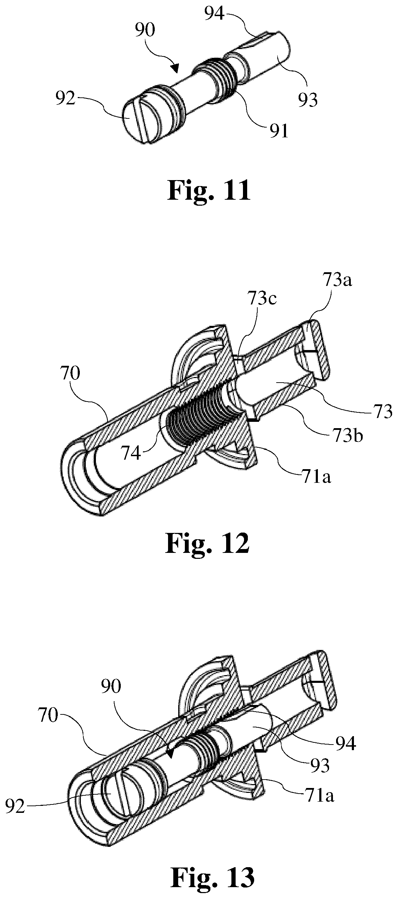

Einen weiteren wesentlichen Aspekt der erfindungsgemässen Ventilkartusche stellt die Ausbildung der Restriktion im Rückströmkanal 73 für das Hydraulikmedium dar, welche in den Detailansichten der Figuren 11-13 gezeigt ist.

Der Rückströmkanal 73 erstreckt sich durch den die beiden Kammern 54 und 55 überbrückenden Abschnitt des Stellelements 70 und umfasst eine seitliche Eintrittsöffnung 73a in das Stellelement 70, einen hohlzylindrischen Abschnitt 73b des Stellelements 70 und eine in der Nähe des Flanschteils 71a seitlich ausmündende Austrittsöffnung 73c aus dem Stellelement 70 (vgl. auch Fig. 3, wo allerdings der Übersichtlichkeit halber keine Bezugszeichen eingetragen sind).

In das Stellelement 70 ist ein längliches Drosselorgan 90 eingeschraubt, wobei ein Aussengewinde 91 des Drosselorgans 90 in ein Innengewinde 74 des Stellelements 70 eingreift, so dass das Drosselorgan 90 im Stellelement 70 in axialer Richtung relativ zu diesem verstellt werden kann. Das Drosselorgan 90 weist an einem Ende einen Schraubkopf 92 und am anderen Ende einen zylindrischen Drosselkopf 93 auf, dessen Aussendurchmesser nur knapp geringer ist als der Innendurchmesser des Abschnitts 73b des Stellelements 70. Das Drosselorgan 90 ist mit seinem Drosselkopf 93 mehr oder weniger tief in den Abschnitt 73b des Stellelements 70 einführbar. Im Drosselkopf 93 ist eine achsparallele Nut 94 eingefräst, deren (radiale) Tiefe vom freien Ende des Drosselkopfs 93 weg abnimmt. Wegen der präzisen Einpassung des Drosselkopfs 93 in den Abschnitt 73b des Stellelements 70 kann der Rückstrom des Hydraulikmediums also nur durch die Nut 74 erfolgen. Der Drosselkopf 93 mit seiner Nut 94 bildet zusammen mit der Innenwand des Abschnitts 73b des Stellelements 70 die schon erwähnte Restriktion. Je nach Einschraubtiefe des Drosselorgans 90 in das Stellelement 70 ragt der Drosselkopf 93 mehr oder weniger weit in den Abschnitt 73b des Stellelements 70 hinein, wobei sich wegen der über ihre Länge unterschiedlichen Tiefe der Nut 94 ein unterschiedlicher Durchflussquerschnitt der so gebildeten Restriktion ergibt. Durch Verstellen des Drosselorgans 90 relativ zum Stellelement 70 kann also der wirksame Durchflussquerschnitt der Restriktion und damit die Verzögerungszeit der Verzögerungseinrichtung 50 in sehr weiten Grenzen äusserst präzis eingestellt werden. Die Verstellung des Drosselorgans 90 und damit Einstellung der Verzögerungszeit kann sehr einfach durch das Stellelement 70 und den Sicherungsring 72 (siehe Fig. 3) hindurch erfolgen, ohne dass dazu die Ventilkartusche demontiert werden muss. Der Sicherungsring 72 bildet einen Anschlag für das Herausschrauben des Drosselorgans 90. Die beschriebene Ausbildung der Restriktion führt zu geringeren Herstellungskosten, weil die Einzelteile einfacher herstellbar sind und grössere Fabrikationstoleranzen erlauben.

Der Drosselkopf 93 kann auch zwei oder mehrere Nuten 94 aufweisen. Alternativ ist es auch möglich, den Drosselkopf 93 ohne Nut 94 auszubilden und dafür eine oder mehrere Längsnut(en) mit entsprechend abnehmendem Tiefenverlauf in der Innenwand des Abschnitts 73b des Stellelements 70 vorzusehen.

Die Einstellung der Verzögerungszeit über das Drosselorgan 90 ist unabhängig von den Druckverhältnissen in der Wasserzuführung.

Die Fig. 6 zeigt eine selbstschliessende Sanitärarmatur in Form eines Wasserhahns, die mit der vorstehend beschriebenen Ventilkartusche ausgerüstet ist. Auf der Ventilkartusche ist zusätzlich ein Griff 102 angeordnet, der bewegungsfest mit dem Griffmitnehmer 2 verbunden ist und zusammen mit diesem ein Bedienorgan bildet. Mit dem Griff 102 sind der Griffmitnehmer 2, das Führungsteil 56 und das Stellelement 70 in axialer Richtung einwärts (in Fig. 6 nach unten) drückbar. Die Ventilkartusche ist gestalterisch an einen Grundkörper 100 des Wasserhahns angepasst und in diesen Grundkörper 100 eingesetzt. Der Grundkörper 100 besitzt einen Zulaufkanal 103 für kaltes Wasser und einen in der Fig. 6 nicht sichtbaren Zulaufkanal für heisses Wasser sowie einen seitlich ausmündenden Ablaufkanal 105 für Mischwasser. Die beiden Zulaufkanäle münden in je einen der beiden Einlässe 3 und 4 der Ventilkartusche, der Ablaufkanal 105 ist mit dem Auslass 5 der Ventilkartusche verbunden.

Die Ventilkartusche ist mit offenem Ventil 48 dargestellt. Der Ringmagnet 64 hat den Magnetanker 46 angezogen und ausgelöst dadurch wurde durch den Wasserdruck der Ventilkörper vom Ventilsitz abgehoben. Kaltes und/oder warmes Wasser kann von den Zulaufkanälen über die Keramikscheiben 31 und 32 der Mischeinrichtung und das Spritzgussteil 42 als Mischwasser zum Ventil 48 fliessen. Das Mischwasser gelangt vom Ventil 48 durch das Spritzgussteil 42 und die Keramikscheiben 32 und 31 zum Auslass 5 und von dort in den Abflusskanal 105. Alle übrigen Elemente der Sanitärarmatur bzw. der in sie eingesetzten Ventilkartusche stimmen mit der in den Figuren 1-3 dargestellten Ventilkartusche überein und sind deshalb hier nicht nochmals gesondert erläutert.

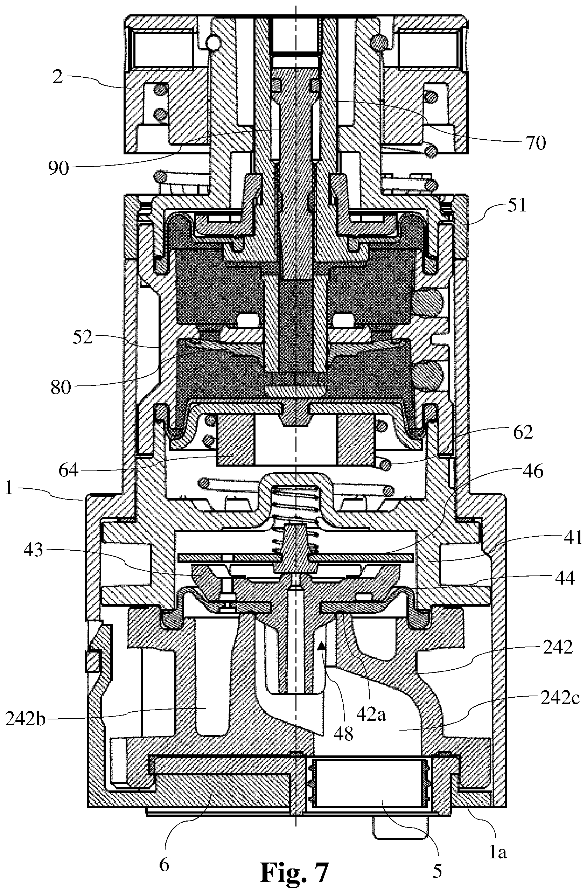

In Fig. 7 ist ein zweites Ausführungsbeispiel der erfindungsgemässen Ventilkartusche dargestellt. Es unterscheidet sich von dem in den Figuren 1-3 dargestellten Ausführungsbeispiel lediglich dadurch, dass es keine Mischeinrichtung und demzufolge auch nur einen einzigen (in der Zeichnung nicht sichtbaren) Einlass aufweist. Die Ventilkartusche ist äusserlich baugleich mit dem ersten Ausführungsbeispiel. Das Spritzgussteil 242, an dem der Ventilsitz 42a ausgebildet ist, ist in axialer Richtung höher ausgebildet, so dass es den durch die fehlenden Keramikscheiben der Mischeinrichtung freigewordenen Raum bis zum Abschlussteil 6 bzw. zur Stirnwand la des Gehäuses 1 überbrückt. Zugeführtes Wasser gelangt über den Einlauf über eine Durchlassöffnung 242b im Spritzgussteil 242 zum Ventil 48 und von dort über eine weitere Durchflussöffnung 242c im Spritzgussteil 242 zum Auslass 5. Alle übrigen Elemente der Ventilkartusche stimmen mit der in den Figuren 1-3 dargestellten Ventilkartusche bau- und funktionsmässig überein und sind deshalb hier nicht nochmals gesondert erläutert.

## Patentansprüche

1. Selbstschliessende Ventilkartusche für eine Sanitärarmatur mit einem Einlass (3, 4) und einem Auslass (5), mit einem Ventil (48) zum Sperren bzw. Freigeben eines Durchflusspfads vom Einlass (3, 4) zum Auslass (5), mit einem mit dem Ventil (48) zusammenarbeitenden, von einer Geschlossen-Stellung in eine Offen-Stellung hin und zurück beweglichen Stellelement (70), mittels welchem bei seiner Hinbewegung das Ventil (48) öffenbar und bei seiner Rückbewegung schliessbar ist, mit einem Rückstellantrieb (62) für die Rückbewegung des Stellelements (70) von der Offen-Stellung in die Geschlossen-Stellung und mit einer Verzögerungseinrichtung (50) für die Rückbewegung des Stellelements (70), wobei die Verzögerungseinrichtung (50) eine erste und eine zweite, ein Hydraulikmedium enthaltende Kammer (54, 55) aufweist, welche Kammern durch eine Trennwand (53) getrennt sind und über eine Einwegventilanordnung (53a, 80) einerseits und einen eine Restriktion aufweisenden Rückströmkanal (73) anderseits kommunizierend verbunden sind, so dass bei der Hinbewegung des Stellelements (70) Hydraulikmedium aus der ersten Kammer (54) durch die Einwegventilanordnung (53a, 80) in die zweite Kammer (55) treibbar ist und bei der Rückstellbewegung des Stellelements (70) Hydraulikmedium aus der zweiten Kammer (55) nur durch den die Restriktion aufweisenden Rückströmkanal (73) in die erste Kammer (54) zurücktreibbar ist, wobei sich der Rückströmkanal (73) durch das Stellelement (70) von einer Eintrittsöffnung (73a) über einen hohlzylindrischen Abschnitt (73b) des Stellelements (70) bis zu einer Austrittsöffnung (73c) erstreckt, **dadurch gekennzeichnet, dass** im Stellelement (70) ein Drosselorgan (90) mit einem zylindrischen Drosselkopf (93) in Längsrichtung des Stellelements (70) relativ zu diesem verstellbar angeordnet ist, wobei der Drosselkopf (93) durch Verstellung des Drosselorgans (90) in den hohlzylindrischen Abschnitt (73b) des Stellelements (70) einführbar ist, und dass entweder der Drosselkopf (93) oder die Innenwand des hohlzylindrischen Abschnitts (73b) des Stellelements (70) eine Nut (94) aufweist, die sich von einem Ende des Drosselkopfs (93) in Längsrichtung desselben erstreckt und eine vom Ende des Drosselkopfs weg abnehmende Tiefe aufweist bzw. die sich von der Austrittsöffnung (73c) des Stellelements (70) in Längsrichtung desselben erstreckt und eine von der Austrittsöffnung (73c) weg abnehmende Tiefe aufweist, wobei der Drosselkopf (93) zusammen mit der Innenwand des hohlzylindrischen Abschnitts (73b) des Stellelements (70) und mit der Nut (94) die Restriktion bildet, wobei durch Verstellung des Drosselorgans (90) relativ zum Stellelement (70) der Rückströmkanal (73) mehr oder weniger verschliessbar und dadurch der Durchflussquerschnitt der Restriktion einstellbar ist.

2. Ventilkartusche nach Anspruch 1, **dadurch gekennzeichnet, dass** sie einen mit dem Stellelement (70) kinematisch verbundenen Magnet (64) zur Betätigung des Ventils (48) aufweist, und dass das Ventil (48) einen Ventilsitz (42a), einen Ventilkörper (43) und einen Magnetanker (46) aufweist, wobei der Magnetanker (46) bei Annäherung des Magneten (64) von diesem anziehbar ist, wobei durch das Anziehen des Magnetankers (46) ein Abheben des Ventilkörpers (43) vom Ventilsitz (42a) und damit ein Öffnen des Ventils (48) auslösbar ist.

3. Ventilkartusche nach Anspruch 2, **dadurch gekennzeichnet, dass** der Magnet (64) ringförmig und der Magnetanker (46) ringplattenförmig ist.

4. Ventilkartusche nach einem der vorangehenden Ansprüche, **dadurch gekennzeichnet, dass** sie eine im Durchflusspfad vor dem Ventil (48) angeordnete einstellbare Mischeinrichtung (30) für aus zwei getrennten Einlässen (3, 4) zuführbares, insbesondere kaltes und warmes Wasser aufweist.

5. Ventilkartusche nach Anspruch 4, **dadurch gekennzeichnet, dass** die Mischeinrichtung (30) zwei relativ zu einander drehverstellbare und dichtend aneinander gleitende Keramikscheiben (31, 32) mit sie durchsetzenden Durchflussöffnungen aufweist, wobei abhängig von der relativen Drehstellung der beiden Keramikscheiben (31, 32) durch die Durchflussöffnungen in den beiden Keramikscheiben (31, 32) Wasser entweder nur vom einen Einlass (3) oder nur vom anderen Einlass (4) oder gleichzeitig von beiden Einlässen (3, 4) zum Ventil (48) führbar ist.

6. Sanitärarmatur, **dadurch gekennzeichnet, dass** sie eine selbstschliessende Ventilkartusche gemäss einem der vorangehenden Ansprüche aufweist.

## Claims

1. Self-closing valve cartridge for a sanitary fitting with an inlet (3, 4) and an outlet (5), with a valve (48) for blocking or unblocking a flow path from the inlet (3, 4) to the outlet (5), with an actuating element (70) which cooperates with the valve (48) and is movable back and forward between a closed position and an open position, wherein the valve (49) is openable by means of its forward movement and closable by means of its return movement, and with a return drive (62) for the return movement of the actuating element (70) from the open position to the closed position, and with a delay device (50) for the return movement of the actuating element (70), wherein the delay device (50) has a first and a second hydraulic medium containing chamber (54, 55), which chambers are separated by a partition wall (53) and are communicatively connected on the one hand via a one-way valve arrangement (53a, 80) and on the other hand via a return flow channel (73) having a restriction, so that hydraulic medium is allowed to be driven from the first chamber (54) into the second chamber (55) through the one-way valve arrangement (53a, 80) during the forward movement of the actuating element (70) and so that during the return movement of the actuating element (70) hydraulic medium is allowed to be driven back from the second chamber (55) into the first chamber (54) only through the return flow channel (73) having the restriction, wherein the return flow channel (73) extends through the actuating element (70) from an inlet opening (73a) via a hollow cylindrical section (73b) of the actuating element (70) to an outlet opening (73c), **characterized in that** a throttle member (90) having a cylindrical throttle head (93) is arranged in the actuating element (70) such that it can be adjusted in the longitudinal direction of the actuating element (70), wherein the throttle head (93) is insertable in the hollow cylindrical portion (73b) of the actuating element (70) by adjusting the throttle member (90), **and in that** either the throttle head (93) or the inner wall of the hollow cylindrical portion (73b) of the actuating element (70) has a groove (94) which extends from one end of the throttle head (93) in the longitudinal direction thereof and has a depth that decreases away from the end of the throttle head or which extends from the outlet opening (73c) of the actuating element (70) in the longitudinal direction thereof and has a depth that decreases away from the outlet opening (73c), wherein the throttle head (93) forms the restriction with the inner wall of the hollow cylindrical portion (73b) of the actuating element (70) and with the groove (94), wherein by adjusting the throttle member (90) relative to the actuating element (70), the return flow channel (73) can be closed to a greater or lesser extent and whereby the flow cross-section of the restriction is adjustable.

2. Valve cartridge according to claim 1, **characterized in that** it comprises a magnet (64) kinematically connected to the actuating element (70) for actuating the valve (48), and **in that** the valve (48) has a valve seat (42a), a valve body (43) and a magnet anchor (46), wherein the magnet anchor (46) is attracted by the magnet (64) when it approaches, wherein the magnet anchor (46) being attracted causes the valve body (43) to lift off the valve seat (42a) and whereby opening of the valve (48) can be triggered.

3. Valve cartridge according to claim 2, **characterized in that** the magnet (64) is ringshaped and the magnet anchor (46) is ring-plate-shaped.

4. Valve cartridge according to one of the preceding claims, **characterized in that** it comprises an adjustable mixing device (30) arranged in the flow path in front of the valve (48) for being supplied by water, in particular cold and warm, via two separate inlets (3, 4).

5. Valve cartridge according to claim 4, **characterized in that** the mixing device (30) has two ceramic discs (31, 32) which can be rotated relative to one another and sealingly slide against one another and have throughflow openings passing through them, wherein depending on the relative rotational position of the two ceramic discs (31, 32), water can be routed through the throughflow openings in the two ceramic discs (31, 32) either only from the one inlet (3) or only from the other inlet (4) or simultaneously from both inlets (3, 4) to the valve (48).

6. Sanitary fitting, **characterized in that** it has a self-closing valve cartridge according to one of the preceding claims.

## Revendications

1. Cartouche de soupape à fermeture automatique de robinetterie sanitaire comprenant :
- une entrée (3, 4) et une sortie (5),
- une soupape (48) pour fermer ou libérer un chemin de passage entre l'entrée (3, 4) et la sortie (5),
- un élément de réglage (70) coopérant avec la soupape (48) et mobile entre une position de fermeture et une position d'ouverture dans le sens de l'aller et celui du retour qui, pour son mouvement d'aller, ouvre la soupape (48), et pour son mouvement de retour, la ferme,
- un entraînement de rappel (62) pour le mouvement de retour de l'élément de réglage (70) entre la position d'ouverture et la position de fermeture, et
- une installation de temporisation (50) pour le mouvement de retour de l'élément de réglage (70),
^{∗} l'installation de temporisation (50) comportant une première et une seconde chambre (54, 55) contenant un milieu hydraulique, ces chambres étant séparées par une cloison (53) et reliées par, d'une part, un dispositif de soupape à une voie (53a, 80), et d'autre part, un canal de retour (73) comportant une réduction de façon que pour le mouvement d'aller de l'élément de réglage (70), le milieu hydraulique puisse être entraîné à partir de la première chambre (54) dans la seconde chambre (55) à travers le dispositif de soupape à une voie (53a, 80) et pour le mouvement de rappel de l'élément de réglage (70), le milieu hydraulique puisse être entraîné en retour de la seconde chambre (55) dans la première chambre (54) à travers le canal de retour (73) comportant la réduction,
^{∗} le canal de retour (73) traversant l'élément de réglage (70) entre un orifice d'entrée (73a) jusqu'à un orifice de sortie (73c) par un segment cylindrique creux (73b) de l'élément de réglage (70),
cartouche **caractérisée en ce que**
- un organe d'étranglement (90) ayant une tête d'étranglement (93) cylindrique est prévu dans l'élément de réglage (70), dans la direction longitudinale de cet élément de réglage (70), de façon réglable par rapport à celui-ci,
^{∗} la tête d'étranglement (93) s'introduisant dans le segment cylindrique creux (73b) de l'élément de réglage (70) par le déplacement de l'organe d'étranglement (90), et
- soit la tête d'étranglement (93), soit la paroi intérieure du segment cylindrique creux (73b) de l'élément de réglage (70) comporte une rainure (94) qui s'étend à partir d'une extrémité de la tête d'étranglement (93) dans la direction longitudinale de celle-ci et à une profondeur qui diminue à partir de l'extrémité de la tête d'étranglement, c'est-à-dire qui s'étend à partir de l'orifice de sortie (73c) de l'élément de réglage (70) dans la direction longitudinale et à une profondeur qui diminue à partir de l'orifice de sortie (73c),
^{∗} la tête d'étranglement (93) formant la réduction avec la paroi intérieure du segment cylindrique creux (73b) de l'élément de réglage (70) et la rainure (94),
le réglage de l'organe d'étranglement (90) par rapport à l'élément de réglage (70) fermant plus ou moins le canal de retour (73) et réglant ainsi la section de passage de la réduction.

2. Cartouche de soupape selon la revendication 1,
**caractérisée en ce qu'**elle comporte
un aimant (64) relié de manière cinématique avec l'élément de réglage (70) pour actionner la soupape (48), et
la soupape (48) a un siège de soupape (42a), un corps de soupape (43) et un induit magnétique (46),
^{∗} l'induit (46) étant attiré par l'aimant (64) lorsqu'il s'en approche,
^{∗} l'attraction de l'induit magnétique (46) déclenchant le soulèvement du corps de soupape (43) par rapport au siège de soupape (42a) et ouvrant ainsi la soupape (48).

3. Cartouche de soupape selon la revendication 2,
**caractérisée en ce que**
l'aimant (64) a une forme annulaire et l'induit magnétique (46) a la forme d'une plaque annulaire.

4. Cartouche de soupape selon l'une des revendications précédentes,
**caractérisée en ce qu'**elle comporte
un mitigeur réglable (30) dans le chemin de passage en amont de la soupape (48) pour de l'eau, notamment froide et chaude, arrivant par deux entrées (3, 4) séparées.

5. Cartouche de soupape selon la revendication 4,
**caractérisée en ce que**
le mitigeur (30) comporte deux disques en céramique (31, 32) glissant l'un sur l'autre de manière étanche, en étant réglables en rotation, et traversés par des orifices de passage, l'eau arrivant seulement d'une entrée (3) ou seulement de l'autre entrée (4) ou en même temps des deux entrées (3, 4) vers la soupape (48) en fonction de la position de rotation relative des deux disques en céramique (31, 32) à travers les orifices de passage dans les deux disques en céramique (31, 32).

6. Robinetterie sanitaire,
**caractérisée en ce qu'**elle comporte
une cartouche de soupape à fermeture automatique selon l'une des revendications précédentes.
